# EUROPÄISCHE PATENTSCHRIFT

(11) **EP 2 114 604 B1**
(45) Veröffentlichungstag und Bekanntmachung des Hinweises auf die Patenterteilung: **01.07.2020**
(21) Anmeldenummer: 07856012.5
(22) Anmeldetag: 21.11.2007
(51) Int. Cl.: B23B 51/10

(54) **ENTGRATWERKZEUG**
DEBURRING TOOL
OUTIL D'ÉBAVURAGE

(30) Priorität: 08.01.2007 DE 102007001245; 13.03.2007 DE 102007012013; 28.04.2007 DE 102007020207
(43) Veröffentlichungstag der Anmeldung: 11.11.2009
(73) Patentinhaber: Beier, Hans-Michael, 12623 Berlin (DE)
(72) Erfinder: Beier, Hans-Michael, 12623 Berlin (DE)
(74) Vertreter: Schulz Junghans Patentanwälte PartGmbB
(86) Internationale Anmeldenummer: PCT/DE2007/002107
(87) Internationale Veröffentlichungsnummer: WO 2008/083646

(56) Entgegenhaltungen:
- EP-A- 1 579 937
- WO-A-03/084702
- DE-A1- 10 000 239
- DE-A1- 19 712 377
- US-A1- 2006 140 732

## Beschreibung

Die Erfindung betrifft ein Entgratwerkzeug zum Entgraten von Stosskanten an orthogonal und schräg verlaufenden Querbohrungen mit einem Durchmesser von kleiner 10 mm in einem Bauteil, wie einem Motorblock, einem Einspritzsystem für Verbrennungsmotoren, einem Ventilblock sowie einer Kurbel- oder Getriebewelle. Das Entgratwerkzeug wird beim Einsatz rotatorisch und/oder translatorisch bewegt, besteht aus einem Werkzeugschaft mit Einspannende und einem rohrförmigen Schaftstück, das einen oder mehrere jeweils in einem Durchbruch beweglich gelagerte Schneidenkörper mit einer Schneide hält und ein unter Druck in die Durchgangsbohrung des Werkzeugschaftes gepresster Stoff die Schneide (n) nach aussen bewegt.

Durch DE 102 15 004 B4 ist bereits ein gleichartig anwendbares Entgratwerkzeug bekannt. Für dieses Entgratwerkzeug ist kennzeichnend, dass es aus einem Werkzeugschaft, der ein Einspannende mit einem Stoffanschluss und ein werkzeugseitiges Schaftende mit einem als festes Lager angeordneten Stützkörper hat, und einem rohrförmigen, durch Verbindungselemente mit dem Werkzeugschaft verbundenes Schaftstück besteht. Das Schaftstück hat einen oder mehrere jeweils in einem Durchbruch beweglich gelagerte Schneidenkörper, welche lose mit einem Spiel an der Oberfläche des Stützkörpers, der in Form und Abmessungen von der Oberfläche des Schneidenkörpers stets geometrisch unterschiedlich ist, aufliegen und ein unter Druck in eine Durchgangsbohrung des Werkzeugschaftes gepresster Stoff die Schneide (n) nach aussen bewegt. Die bauliche Ausführung dieses Entgratwerkzeuges erfordert insbesondere durch die notwendigen Verbindungselemente einen hohen Herstellungsaufwand, wodurch eine wirtschaftliche Entgratbearbeitung bei automatisierten Verfahrensabläufen, wie z. B. in Taktstrassen, nicht gegeben ist. Das Entgratwerkzeug ist aber einfach zu handhaben und ermöglicht ein technisch sicheres Entgraten in der erforderlichen Qualität. Dies bedeutet, dass bei Eintritt des Entgratwerkzeuges in die Bohrung durch die Schneide (n) keine sichtbaren Spuren an der Bohrungswand entstehen. Stosskanten an sich kreuzenden Bohrungen eines Werkstückes sind beispielsweise dadurch entgratbar, in dem an der Werkzeugmaschinensteuerung ein Druck p von 0,3 MPa programmiert wird und dann das Entgratwerkzeug in die Bohrung einfährt. Somit werden die ausserhalb des Werkzeugschaftes liegenden Schneiden nach innen bewegt, Teilbereiche des Durchbruches werden frei und der in die Durchgangsbohrung des Entgratwerkzeuges gepresste flüssige oder gasförmige Soff kann dann abfliessen. Tritt die Schneide in die Querbohrung ein, bewegt sich diese durch den anliegenden Druck, welcher durch die vorhandene Flächendifferenz zwischen Stützkörper und Schneidenkörper entsteht, nach aussen. Jetzt liegt eine bestimmte, zum Entgraten nutzbare Kraft an. Die Schneidenkräfte des Entgratwerkzeuges sind über die Werkzeugmaschinensteuerung durch Änderung des Druckes variabel einstellbar und auch den unterschiedlich zu entgratenden Werkstoffen anpassbar. Die am Schneidenkörper angeordnete Schneide hat eine Schneidenhöhe kleiner 1 mm und eine Schneiden-, breite von kleiner als 0,5 mm. Die Schneide weist seitlich angeordnete Schultern auf, die mit einem Schulterwinkel von 5 bis 45 Grad versehen sind. Damit ist die Schneide besonders zum Entgraten von Querbohrungen mit kleineren Durchmessern einsetzbar. Eine exakte Schneidenführung soll gegeben sein, wenn der Schneidenkörper ein Schneidenmittelstück mit der Schneide und eine z. B. radiale, seitliche Schneidenbegrenzung hat. Für die Schneide ist weiterhin kennzeichnend, dass der aktiv schneidende Teilbereich eine Schräge von 60 Grad aufweist, ihre Flächen immer parallel zur x und γ-Achse angeordnet sind und einen Freiwinkel von Null Grad haben. Dies hat den Vorteil, dass das Entgratwerkzeug nach dem Entgraten beim Ausfahren im Linkslauf den u. U. entstehenden Sekundärgrat beseitigt. Feststellbar ist, dass während des Entgratens am aktiv schneidenden Teilbereich der Schneide und dem Gratbasisprofil nicht konstante Eingriffswinkel gegeben sind. Erkennbar wird dies, wenn ein oder mehrere Tangenten an einem Kreis anliegen. Der Winkel zwischen Tangente und Kreis ändert sich stetig, auch wenn der aktiv schneidende Teilbereich der Schneide parabel-, ellipsen- oder hyperbelförmig ausgeführt ist. Dies kann in bestimmten Bereichen des bereits entgrateten Gratprofils zu unbefriedigenden Ergebnissen, wie der Entstehung von Absätzen oder ungleichmässigen Abtragungen, führen. Zusätzlich wird die Schneide stossartig belastet. Ein anderer Nachteil des Entgratwerkzeuges besteht in den an der Schneide seitlich angeordneten Schultern, welche ein Entgraten von schräg verlaufenden Querbohrungen mit kleineren Durchmessern behindern. Untersuchungen an schräg verlaufenden Querbohrungen, die einen Kreuzungswinkel kleiner 90 Grad haben, belegen ebenfalls, dass dieses Werkzeug in Abhängigkeit von den Werkstoffkennwerten nur bedingt zum Entgraten von Stosskanten an Querbohrungen mit einem Kreuzungswinkel von bis zu 75 Grad einsetzbar ist. Speziell für Bauteile der Fahrzeugindustrie werden vorrangig hochfeste Werkstoffe verwendet. Aber das durch DE 102 15004 B4 bekannte Entgratwerkzeug kann auf Grund seiner Schneidengeometrie diesen Grat nicht qualitätsgerecht entfernen. Dieser wird bekanntermassen vorrangig immer noch manuell mit einem grossen Aufwand beseitigt. Bekannt sind auch mechanisch arbeitende Werkzeuge zum Entgraten des Bohrungsrandes von Bohrungen und Querbohrungen. Die mechanisch arbeitenden Werkzeuge entgraten je nach Kreuzungswinkel die im Raum liegende Ellipse in einem Bereich von 270 Grad bis 320 Grad. Der Restbereich von 40 Grad bis 90 Grad wird nicht entgratet. Dies ist der Bereich, welcher einen Kantenwinkel < 90 Grad hat. Ursache dafür ist die Tatsache, dass im Bereich der kleinen Kantenwinkel ein grosser Eingriffswinkel zwischen Schneide und Kantenwinkel der Ellipse entsteht. Beim Einfahren des Werkzeuges in die Bohrung wird entweder der Grat weggedrückt oder beim Entgraten wird neuer Grat in Form eines Sekundärgrates produziert. Weiterhin ist durch DE 10 2004 054 989 A1 ein Entgratwerkzeug zum Entgraten kleiner Bohrungsdurchmesser bekannt, bei dem in einem Grundkörper mindestens eine quer zur Längsachse des Grundkörpers gerichtete Ausnehmung angeordnet ist, in welcher mindestens ein Messer in Längsrichtung der Ausnehmung federbelastet verschiebbar angeordnet ist, und in einer Längsbohrung des Grundkörpers eine Druckfeder angeordnet ist, die sich an das eine Ende eines Steuerbolzens anlegt, dessen anderes Ende in einer im Messer angeordneten Steuerausnehmung eingreift, welche dem Messer in Verschieberichtung eine Haltekraft zuordnet. Kennzeichnend ist hier, dass zum Entgraten von Bohrungsdurchmessern < 20 mm der Grundkörper an seiner Vorderseite in eine Führungshülse kleineren Durchmessers übergeht, in der ein als Gleitführung ausgebildete Längsbohrung zur Führung der dort verschiebbar gelagerten Bolzenspitze des Steuerbolzens angeordnet ist, wobei der Grundköper und die Führungshülse durch eine Schraubverbindung miteinander verbunden sein können. Mit der Anordnung einer auswechselbaren Führungshülse unterschiedlichen Durchmessers werden die Herstellungskosten des Entgratwerkzeuges gesenkt. So soll es auch möglich sein, einen Durchmesser der Führungshülse von beispielsweise 2 mm zu erreichen, wobei die Länge der Führungshülse etwa 23 mm beträgt. Eine derart miniaturisierte Ausführung der Führungshülse ist technisch aber nur mit einem hohen Aufwand funktionssicher umzusetzen. Hinzu kommt, dass das federbelastet, verschiebbar angeordnete Messer beim Entgraten Spuren an der Bohrungswand erzeugt. Ein in DE 37 27 103 C2 dargestelltes Entgratwerkzeug sowie ein zugehöriger Werkzeughalter sollen zum Entgraten oder Anfasen auch von schräg verlaufenden Querbohrungen in Drehteilen, wie beispielsweise in Ventilschiebern, Ventilbuchsen, Düsen und dergleichen, einsetzbar sein. Kennzeichnend ist, dass der Werkzeugkörper mit dem Entgratwerkzeug von einer Werkzeugmaschinenspindel, die nur eine Vorschubbewegung längs der Querbohrungsachse durchführen kann, angetrieben wird. Eine koaxial zur Spindelachse angeordnete feste Achse trägt am werkzeugseitigen Ende eine Steuerkurve mit einem im Wesentlichen elliptischen Querschnitt. Zum Einspannen des Werkzeugkörpers hat die Spindel ausserdem einen Werkzeughalter, der aus einem Einspannbereich zum Einspannen an der Spindel und einem das Werkzeug haltenden Werkzeugbefestigungsbereich besteht. Der Werkzeugbefestigungsbereich ist relativ zum Einspannbereich in Richtung von der Schneidkante zur Werkzeuglängsachse quer zu letzterer entgegen der Wirkung einer Federvorrichtung bewegbar. Hinzu kommt, dass am Werkzeugbefestigungsbereich ein leistenförmig ausgebildeter Abtaster fest angeordnet ist, der unter der Wirkung der Federvorrichtung am Umfang der Steuerkurve anliegt, wodurch die Federn (Blattfedern) einerseits vorgespannt sind und sich anderseits das Werkzeug leicht in eine Querbohrung eines Werkstückes einfahren lässt. Das Entgratwerkzeug hat selbst eine schraubenlinienförmig zum Einspannbereich verlaufende Kurvenfläche, die an einer ebenen Fläche des Werkzeuges endet. Dort, wo das obere Ende der Kurvenfläche die ebene Fläche durchdringt, bildet das Entgratwerkzeug die Schneidkante. Diese Kurvenfläche soll gewährleisten, dass sich bei jedem Schnitt in einer die Werkzeuglängsachse und einen Werkzeugdurchmesser enthaltenen Ebenen dieselbe der Schneidkante entsprechende Bogenlinie ergibt. Damit hinter der Schneidkante ein Freiwinkel entsteht, verläuft die Kurvenfläche schraubenlinienförmig und ergibt vom Schnitt senkrecht zur Werkzeuglängsachse für jeden Punkt der Schneidkante einen Teil einer Spirale, deren radialer Abstand von der Werkzeuglängsachse, ausgehend von der Schneidkante, entgegen der Drehrichtung des Werkzeuges abnimmt. Im Bereich der Einführschräge, d. h. des Einführkonus sowie im Bereich der Kreiszylinderfläche hat der Werkzeugkörper einen Freiwinkel von Null Grad. Beim Einführen des Entgratwerkzeuges in die Werkstückbohrung soll somit das Werkzeug trotz Drehungen lediglich an der Bohrungswand reiben. Das vorgeschlagene Entgratwerkzeug ist auch zum Entgraten von schräg verlaufenden Querbohrungen einsetzbar. Für diesen Einsatzzweck muss aber eine entsprechende Schneidengeometrie errechnet werden, die dann zu einer brauchbaren Fase führt. Die Nachteile des durch DE 37 27 103 C2 bekannten Entgratwerkzeuges mit dem zugehörigen Werkzeughalter bestehen darin, dass die Schneidkante des Werkzeuges in Teilen einer Ellipse ausgebildet ist und damit ebenfalls keine konstanten Eingriffswinkel gegeben sind. Durch aufwendig herzustellende Bauteile in Form einer Steuerkurve mit einem elliptischen Querschnitt, einer Federvorrichtung und eines Abtasters wird der radiale Abstand der Schneidkante von der Werkzeugdrehachse gesteuert und durch eine konstruktiv aufwendige Ausführung des Werkzeugkörpers und seiner Schneidkante wird ein Entgraten der Durchgangs-/Stosskanten an den Querbohrungen, die von zwei einander durchdringenden kreiszylindrischen Flächen erzeugt werden, erst ermöglicht. Der Freiwinkel hinter der Schneidkante hat weiterhin den Nachteil, dass der sich beim Entgraten der Querbohrungen bildende Sekundärgrat nicht vom Entgratwerkzeug beseitigt werden kann. Dieses Entgratwerkzeug ist nur zum Entgraten von Stosskanten an Querbohrungen mit einem grossen Durchmesser einsetzbar. Auf Grund der konstruktiven Ausführung ist eine Miniaturisierung des Entgratwerkzeuges nicht oder nur mit einem enormen Aufwand zu realisieren.

Die Aufgabe der Erfindung besteht deshalb darin, ein Entgratwerkzeug zum Entgraten von Stosskanten an orthogonal und schräg verlaufenden Querbohrungen mit einem Durchmesser von kleiner 10 mm in einem Bauteil, wie einem Motorblock, einem Einspritzsystem für Verbrennungsmotoren, einem Ventilblock sowie einer Kurbel- und Getriebewelle zu schaffen, das durch eine einfachere, funktionssichere bauliche Ausführung kostengünstiger herstellbar ist, den

Grat an den Stosskanten von Bauteilen aus hochfesten Werkstoffen und unabhängig von den Werkstoffkennwerten im nicht entgratbaren Ellipsenbereich durch eine veränderte Schneidengeometrie qualitätsgerecht entgratet und auch den Grat ohne stossartige Belastungen der Schneide beseitigt, in dem der aktiv schneidende Teilbereich der Schneide am Schneidenkörper während des Entgratens am Gratbasisprofil stets einen konstanten Eingriffswinkel aufweist. Zur Lösung der Aufgabe ist das eingangs genannte Entgratwerkzeug durch die Merkmale des unabhängigen Anspruchs 1 weitergebildet.

Die Merkmale der Unteransprüche geben ebenfalls vorteilhafte Weiterbildungen und Verbesserungen des erfindungsgemässen Entgratwerkzeuges an.

Das erfindungsgemäße Entgratwerkzeug dient zum Entgraten von Stosskanten an orthogonal und schräg verlaufenden Querbohrungen in einem Bauteil, wie einem Motorblock, einem Einspritzsystem für Verbrennungsmotoren, einem Ventilblock sowie einer Kurbel- oder Getriebewelle, welches beim Einsatz rotatorisch und/oder translatorisch bewegt wird. Es umfasst einen Werkzeugschaft, der ein Einspannende und ein werkzeugseitiges Schaftende mit einem als festes Lager angeordneten Stützkörper hat, und einem rohrförmigen Schaftstück, das mit dem Werkzeugschaft verbunden ist und einen oder mehrere jeweils in einem Durchbruch beweglich gelagerte Schneidenkörper mit einer Schneide hält, so dass ein unter Druck in eine Durchgangsbohrung des Werkzeugschaftes gepresster Stoff die Schneide (n), welche seitliche Begrenzungen realisierende mit einem Schulterwinkel von 5 bis 45 Grad angeordnete Schultern, und parallel zu einer in Querrichtung verlaufenden x -Achse mit einem Freiwinkel von Null Grad angeordnete Flächen F1;F2;F3) aufweisen, nach aussen bewegen.

Die Kontur der Schneide am Schneidenkörper ist in der Seitenansicht eine zyklische Kurvenfläche F2 mit einer zum Schneidenkörper abschliessenden Gerade, eine parallel im Abstand zum Schneidenkörper verlaufende ebene Fläche , deren Länge durch die Abstände der Konstruktionspunkte der zyklischen Kurvenfläche F2 und einer weiteren zyklischen Kurvenfläche F1 von der Mitte der Schneide und die Schneidenhöhe bestimmt ist, und die weitere zyklische Kurvenfläche F1, die mit einem zum Schneidenkörper abschliessenden Kreissektor ausgestaltet ist, und wobei der aktiv schneidende Teilbereich die zyklischen Kurvenflächen F2;F1 sind.

In bevorzugter Ausführungsform ist vorgesehen, dass die zyklischen Kurvenflächen F2; F1 als logarithmische Spiralen ausgeführt sind.

Die zyklischen Kurvenflächen F2;F1 können identisch sein.

Weiterhin ist das Entgratwerkzeug dann vorteilhaft ausgestaltet, wenn die zyklische Kurvenfläche (F2) aus mindestens zwei zyklischen Kurvenflächen F4;F5 besteht und jede dieser zyklischen Kurvenflächen einen unterschiedlichen Tangentenwinkel hat.

In entsprechender Weise kann auch dass die zyklische Kurvenfläche F1 aus mindestens zwei zyklischen Kurvenflächen F4;F5 bestehen und jede dieser zyklischen Kurvenflächen kann einen unterschiedlichen Tangentenwinkel haben.

Die Länge der ebenen Fläche F3 kann den Durchmesser der zu entgratenden Querbohrung bestimmen.

Dabei kann die Länge der ebenen Fläche F3 gegen Null gehen.

Weiterhin kann das Entgratwerkzeug derart ausgestaltet sein, dass die Kontur der seitlich angeordneten Begrenzungen eine gespiegelte zyklische Kurvenfläche ist.

Insbesondere kann der Schneidenkörper eine Breite von ≤ 1 mm, vorzugsweise von ≤ 0,5 mm und die Schneide eine Breite von ≤ 0,5 mm, vorzugsweise von ≤ 0,3 mm haben.

Vorteilhafterweise kann dieses ausgeführte Entgratwerkzeug durch das einschiebbare, als Stützkörper wirkende Schneidenlager und durch weniger Einzelteile mit einem geringeren Aufwand funktionssicher hergestellt werden. Die veränderte Schneidengeometrie in unterschiedlichen Ausführungen hat weiterhin die Vorteile, dass der Grat an orthogonal und schräg verlaufenden Querbohrungen in Bauteilen in kürzester Zeit durch ein Hochgeschwindigkeitsentgraten vollständig entfernt wird. Zum Entgraten der Stosskanten an den Querbohrungen kann das Entgratwerkzeug sowohl in die Hauptbohrung als auch in die Querbohrung einfahren. Damit sind die technologischen Voraussetzungen für den Einsatz dieses Entgratwerkzeuges in Taktstrassen gegeben.

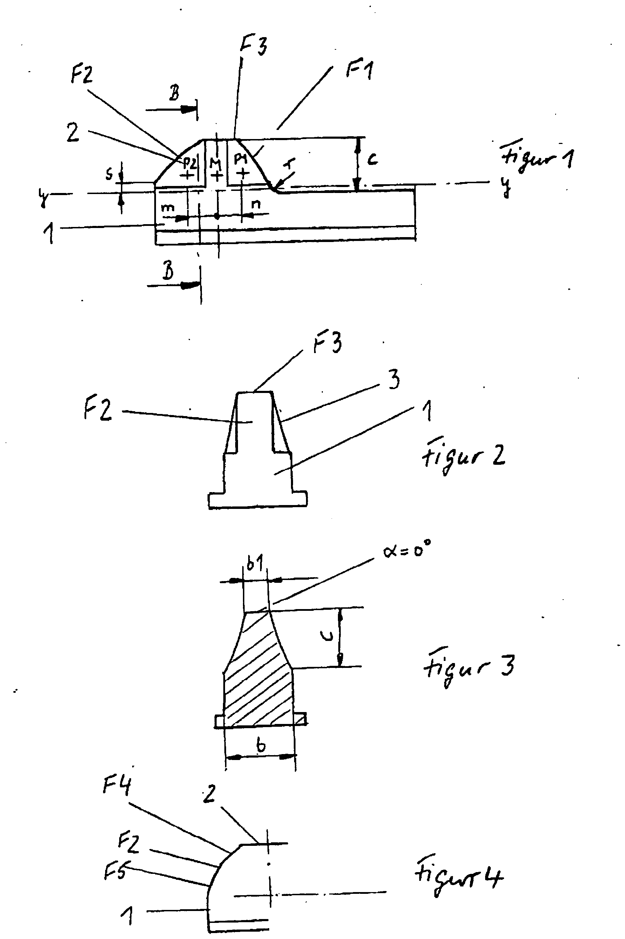

Die Erfindung soll an Ausführungsbeispielen näher erläutert werden. Hierzu zeigen die zugehörigen Zeichnungen in:
Fig .1: eine Ausführungsform des Entgratwerkzeugs in der Seitenansicht,
Fig .2 : die stirnseitige Schneidenausführung von Fig.1,
Fig .3 : eine Schneidenausführung im Schnitt B-B von Fig. 1, die jedoch kein Ausführungsbeispiel darstellt, und
Fig.4 : eine andere Ausführung der zyklischen Kurvenfläche F2.

Fig.1 zeigt eine Ausführungsform des Entgratwerkzeugs in der Seitenansicht. Erkennbar ist, dass die Kontur der Schneide 2 am Schneidenkörper 1 eine zyklische Kurvenfläche F2 mit einer zum Schneidenkörper 1 abschliessenden Gerade s, eine parallel im Abstand c zum Schneidenkörper 1 verlaufende ebene Fläche F3 und eine weitere zyklische Kurvenfläche F1 mit einem zum Schneidenkörper 1 abschliessenden Kreissektor r ist. Es hat sich durch Erprobungen herausgestellt, dass eine Ausführung der zyklischen Kurvenflachen F2;F1 als logarithmische Spiralen in der Praxis kostengünstig umsetzbar ist. Der Herstellungsaufwand kann noch gesenkt werden, wenn die zyklischen Kurvenflächen F2;F1 identisch ausgeführt sind. Die Länge der ebenen Fläche F3 ist durch die Schneidenhöhe c sowie durch die Abstände m;n bestimmt. Die Konstruktionspunkte P1;P2 sind von der Mitte M der Schneide 2 festgelegt. Je kleiner der Durchmesser der Querbohrungen der zu entgratenden Stosskanten ist, desto geringer ist die Länge der ebenen Fläche F3, die aber auch gegen Null gehen kann.

Fig.2 zeigt eine stirnseitige Schneidenausführung von Figur 1. Es ist dargestellt, dass die an der Schneide F2 am Schneidenkörper 1 seitlich angeordneten Begrenzungen 3 als eine gespiegelte zyklische Kurvenfläche F2 ausgeführt sind. Diese Schneidenausführung ermöglicht so das Entgraten von Stosskanten an schräg verlaufenden Querbohrungen. Die veränderte konstruktive Ausführung der Schultern in Form seitlicher Begrenzungen sichert ebenfalls eine verbesserte Aufnahme von Spannungen. Damit sind stossartige Belastungen der Schneide ausgeschlossen oder können entscheidend reduziert werden.

Fig.3 zeigt eine Schneidenausführung im Schnitt B-B von Figur 1. Diese Schneidenausführung hat keine seitlichen Begrenzungen und ist keine Ausführungsform der Erfindung. Der Freiwinkel beträgt Null Grad. Der Schneidenkörper 1 hat eine Breite b von < 1 mm, vorzugsweise von < 0,5 mm und die Schneide 2 hat eine Breite b1 von < 0,5 mm, vorzugsweise von < 0,3 mm. Die Schneide 2 ohne seitliche Begrenzungen ermöglicht ein Entgraten von Stosskanten an Querbohrungen mit einem Durchmesser von kleiner 1,5 mm.

Fig.4 zeigt eine andere Ausführung der zyklischen Kurvenfläche F2. Erkennbar ist, dass die zyklische Kurvenfläche F2 der Schneide 2 am Schneidenkörper 1 aus zwei zyklischen Kurvenflächen F4;F5 besteht und jede zyklische Kurvenfläche einen unterschiedlichen Tangentenwinkel hat. Somit sind Stosskanten an Querbohrungen mit einem Durchmesser von kleiner 1 mm entgratbar.

### Bezugszeichenliste

- 1: Schneidenkörper
- 2: Schneide
- 3: seitliche Begrenzung
- F1: Kurvenfläche der Schneide 2
- F2: Kurvenfläche der Schneide 2
- F3: ebene Fläche der Schneide 2
- F4: zyklische Kurvenfläche
- F5: zyklische Kurvenfläche
- M: Mitte der Schneide 2
- P1: Konstruktionspunkt für F1
- P2: Konstruktionspunkt für F2
- b: Breite des Schneidenkörpers 1
- b1: Breite der Schneide 2
- c: Höhe der Schneide 2
- m: Abstand
- n: Abstand
- r: Radius Kreissektor
- s: Gerade

## Patentansprüche

1. Entgratwerkzeug zum Entgraten von Stosskanten an orthogonal und schräg verlaufenden Querbohrungen in einem Bauteil, wie einem Motorblock, einem Einspritzsystem für Verbrennungsmotoren, einem Ventilblock sowie einer Kurbel- oder Getriebewelle, welches beim Einsatz rotatorisch und/oder translatorisch bewegt wird, aus einem Werkzeugschaft , der ein Einspannende und ein werkzeugseitiges Schaftende mit einem als festes Lager angeordneten Stützkörper hat, und einem rohrförmigen Schaftstück , das mit dem Werkzeugschaft verbunden ist und einen oder mehrere jeweils in einem Durchbruch beweglich gelagerte Schneidenkörper (1) mit einer Schneide (2) hält, so dass ein unter Druck in eine Durchgangsbohrung des Werkzeugschaftes gepresster Stoff die Schneide (n) (2), welche seitliche Begrenzungen (3) realisierende mit einem Schulterwinkel von 5 bis 45 Grad angeordnete Schultern, und parallel zu einer in Querrichtung verlaufenden x -Achse mit einem Freiwinkel von Null Grad angeordnete Flächen (F1;F2;F3) aufweisen, nach aussen bewegen, **dadurch gekennzeichnet, dass** die Kontur der Schneide (2) am Schneidenkörper in der Seitenansicht eine zyklische Kurvenfläche (F2) mit einer zum Schneidenkörper (1) abschliessenden Gerade (s),
eine parallel im Abstand (c) zum Schneidenkörper (1) verlaufende ebene Fläche (F3), deren Länge durch die Abstände (m; n) der Konstruktionspunkte der zyklischen Kurvenfläche (F2) und einer weiteren zyklischen Kurvenfläche (F1) von der Mitte der Schneide und die Schneidenhöhe (c) bestimmt ist,
und die weitere zyklische Kurvenfläche (F1) mit einem zum Schneidenkörper (1) abschliessenden Kreissektor (r) ist, wobei der aktiv schneidende Teilbereich die zyklischen Kurvenflächen (F2; F1) sind.

2. Entgratwerkzeug nach Anspruch 1, **dadurch gekennzeichnet, dass** die zyklischen Kurvenflächen (F2;F1) als logarithmische Spiralen ausgeführt sind.

3. Entgratwerkzeug nach Anspruch 1 und 2, **dadurch gekennzeichnet, dass** die zyklischen Kurvenflächen (F2;F1) identisch sind.

4. Entgratwerkzeug nach einem der vorhergehenden Ansprüche, **dadurch gekennzeichnet, dass** die zyklische Kurvenfläche (F2) aus mindestens zwei zyklischen Kurvenflächen (F4;F5) besteht und jede dieser zyklischen Kurvenflächen einen unterschiedlichen Tangentenwinkel hat.

5. Entgratwerkzeug nach einem der vorhergehenden Ansprüche, **dadurch gekennzeichnet, dass** die zyklische Kurvenfläche (F1) aus mindestens zwei zyklischen Kurvenflächen (F4;F5) besteht und jede dieser zyklischen Kurvenflächen einen unterschiedlichen Tangentenwinkel hat.

6. Entgratwerkzeug nach einem der vorhergehenden Ansprüche, **dadurch gekennzeichnet, dass** die Länge der ebenen Fläche (F3) den Durchmesser der zu entgratenden Querbohrung bestimmt.

7. Entgratwerkzeug nach einem der vorhergehenden Ansprüche, **dadurch gekennzeichnet, dass** die Länge der ebenen Fläche (F3) gegen Null geht.

8. Entgratwerkzeug nach einem der vorhergehenden Ansprüche, **dadurch gekennzeichnet, dass** die Kontur der seitlich angeordneten Begrenzungen (3) eine gespiegelte zyklische Kurvenfläche ist.

9. Entgratwerkzeug nach einem der vorhergehenden Ansprüche, **dadurch gekennzeichnet, dass** der Schneidenkörper (1) eine Breite (b) von ≤ 1 mm, vorzugsweise von ≤ 0,5 mm und die Schneide (2) eine Breite (b1) von ≤ 0,5 mm, vorzugsweise von ≤ 0,3 mm hat.

## Claims

1. A deburring tool for deburring abutting edges on orthogonal and diagonal cross bores in a component, such as an engine block, an injection system for internal combustion engines, a valve block, and a crank or transmission shaft, which is moved rotationally and/or translationally in use, including a tool shank, which has a clamping end and a tool-side shank end with a support body arranged as a fixed bearing, and a tubular shank piece, which is connected to the tool shank and holds one or several blade bodies (1) having a blade (2), each of said blade bodies being movably mounted in an aperture, such that a material which is pressed into a through bore of the tool shank under pressure moves the blade(s) (2) outward, said blades having shoulders arranged at a shoulder angle of 5 to 45 degrees and defining lateral boundaries (3), and having surfaces (F1; F2; F3) arranged parallel to a transversely running x-axis and with a clearance angle of zero degrees, **characterized in that** the contour of the blade (2) on the blade body from the lateral perspective is a cyclical camming surface (F2) with a straight line (s) finishing toward the blade body (1),
a flat surface (F3) runs parallel to the blade body (1) at a distance (c), the length of said flat surface being determined by the distances (m; n) of the construction points of the cyclical camming surface (F2) and a further cyclical camming surface (F1) from the center of the blade and by the blade height (c),
and the further cyclical camming surface (F1) presents a circular sector (r) finishing towards the blade body (1), wherein the cyclical camming surfaces (F2; F1) are the active cutting part.

2. The deburring tool according to Claim 1, **characterized in that** the cyclical camming surfaces (F2; F1) are designed as logarithmic spirals.

3. The deburring tool according to Claims 1 and 2, **characterized in that** the cyclical camming surfaces (F2; F1) are identical.

4. The deburring tool according to any one of the preceding claims, **characterized in that** the cyclical camming surface (F2) consists of at least two cyclical camming surfaces (F4; F5) and each of these cyclical camming surfaces has a different tangential angle.

5. The deburring tool according to any one of the preceding claims, **characterized in that** the cyclical camming surface (F1) consists of at least two cyclical camming surfaces (F4; F5) and each of these cyclical camming surfaces has a different tangential angle.

6. The deburring tool according to any one of the preceding claims, **characterized in that** the length of the flat surface (F3) determines the diameter of the cross bore to be deburred.

7. The deburring tool according to any one of the preceding claims, **characterized in that** the length of the flat surface (F3) is approaching zero.

8. The deburring tool according to any one of the preceding claims, **characterized in that** the contour of the laterally arranged boundaries (3) is a mirrored cyclical camming surface.

9. The deburring tool according to any one of the preceding claims, **characterized in that** the blade body (1) has a width (b) of ≤ 1 mm, preferably of ≤ 0.5 mm, and the blade (2) has a width (b1) of ≤ 0.5 mm, preferably of ≤ 0.3 mm.

## Revendications

1. Outil d'ébavurage pour l'ébavurage de bords sur des alésages transversaux s'étendant de façon orthogonale et diagonale sur une pièce, comme un bloc-moteur, un système d'injection pour moteurs à combustion interne, un bloc-valve ainsi qu'un vilebrequin ou un arbre de transmission, lequel est déplacé de façon rotative et/ou translationnelle lors de son utilisation, composé d'une queue d'outil, laquelle a une extrémité de serrage et une extrémité de queue du côté de l'outil avec un corps d'appui disposé comme palier fixe, et d'une pièce de queue tubulaire, laquelle est reliée à la queue d'outil et maintient un ou plusieurs corps de coupe (1) avec une lame (2) respectivement montés de façon mobile dans une ouverture, de telle sorte qu'une matière comprimée sous pression dans un alésage traversant de la queue d'outil déplace vers l'extérieur la/les lame(s) (2), laquelle/lesquelles présente(nt) des épaulements réalisant des limitations latérales (3) disposés avec un angle d'épaulement de 5 à 45 degrés, et des surfaces (F1 ; F2 ; F3) disposées parallèlement à un axe x s'étendant transversalement avec un angle de dépouille de zéro degré, **caractérisé en ce que** le contour de la lame (2) est une surface incurvée cyclique (F2) sur le corps de lame en vue latérale, avec une droite (s) se terminant au corps de lame (1),
une surface plane (F3) s'étendant parallèlement à distance (c) du corps de lame (1), dont la longueur est déterminée par les distances (m ; n) des points de construction de la surface incurvée cyclique (F2) et de l'autre surface incurvée cyclique (F1) du milieu de la lame et par la hauteur de la lame (c),
et l'autre surface incurvée cyclique (F1) avec un secteur circulaire (r) se terminant au corps de lame (1), la région partielle coupant activement étant les surfaces incurvées cycliques (F2; F1).

2. Outil d'ébavurage selon la revendication 1, **caractérisé en ce que** les surfaces incurvées cycliques (F2 ; F1) sont réalisées comme des spirales logarithmiques.

3. Outil d'ébavurage selon les revendications 1 et 2, **caractérisé en ce que** les surfaces incurvées cycliques (F2 ; F1) sont identiques.

4. Outil d'ébavurage selon l'une des revendications précédentes, **caractérisé en ce que** la surface incurvée cyclique (F2) se compose d'au moins deux surfaces incurvées cycliques (F4 ; F5) et **en ce que** chacune de ces surfaces incurvées cycliques a un angle tangentiel différent.

5. Outil d'ébavurage selon l'une des revendications précédentes, **caractérisé en ce que** la surface incurvée cyclique (F1) se compose d'au moins deux surfaces incurvées cycliques (F4 ; F5) et **en ce que** chacune de ces surfaces incurvées cycliques a un angle tangentiel différent.

6. Outil d'ébavurage selon l'une des revendications précédentes, **caractérisé en ce que** la longueur de la surface plane (F3) détermine le diamètre de l'alésage transversal devant être ébavuré.

7. Outil d'ébavurage selon l'une des revendications précédentes, **caractérisé en ce que** la longueur de la surface plane (F3) s'approche de zéro.

8. Outil d'ébavurage selon l'une des revendications précédentes, **caractérisé en ce que** le contour des limitations (3) disposées latéralement est une surface incurvée cyclique réfléchie.

9. Outil d'ébavurage selon l'une des revendications précédentes, **caractérisé en ce que** le corps de coupe (1) a une largeur (b) qui est ≤ 1 mm, de préférence ≤ 0,5 mm, et **en ce que** la lame (2) a une largeur (b1) qui est ≤ 0,5 mm, de préférence ≤ 0,3 mm.
